# EUROPEAN PATENT APPLICATION

(11) **EP 3 618 447 A1**
(43) Date of publication of application: **04.03.2020**
(21) Application number: 18904527.1
(22) Date of filing: 19.03.2018
(51) Int. Cl.: H04N 21/2347, H04N 21/2343, H04N 19/46

(54) **METHOD AND TERMINAL FOR PLAYBACKING VIDEO FILE**

(30) Priority: 09.02.2018 CN 201810136741
(71) Applicant: Wangsu Science & Technology Co., Ltd., Shanghai 200030 (CN)
(72) Inventor: HUANG, Zhenlin, Shanghai 200030 (CN); CHEN, Yunhui, Shanghai 200030 (CN); FAN, Shaozhuo, Shanghai 200030 (CN)
(74) Representative: EIP
(86) International application number: PCT/CN2018/079498
(87) International publication number: WO 2019/153432

(57) **Abstract**

The present disclosure discloses a method and terminal for playing a video file in the technical field of playing a video. The method comprises: a video client receives a video playing instruction for a target video, constructs a video playing request directed to a preset decryption proxy module, and invokes a system hardware player to process the video playing request; the decryption proxy module acquires a download request of the system hardware player for an index file of the target video; the decryption proxy module downloads an index file of the target video, reconstructs an encrypted key storage address in the index file, returns the reconstructed index file to the system hardware player; the system hardware player acquires a key through the reconstructed key storage address, plays the video file of the target video according to the key. The system hardware player may play a video file encrypted twice.

## Description

### TECHNICAL FIELD

The present application relates to the technical field of video play, and in particular, to a method and terminal for playing a video file.

### BACKGROUND

Nowadays, watching videos is one of the mainstream entertainments. A large number of user terminals are installed with video clients, through which users may play video files provided by video service providers. At present, a growing number of video service providers provide live and on-demand services on video files by using a streaming media protocol of HLS (HTTP Live Streaming). Further, video service providers would generally encrypt video files in order to prevent video files from being illegally reproduced and spread.

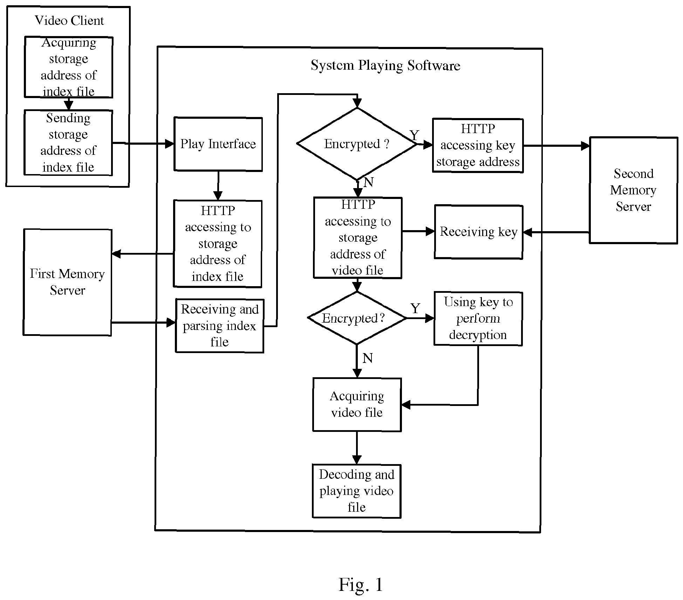

In general, when a video service provider encrypts a video file, a key for decryption would be stored separately, and then an index file recorded with a storage address of the video file and a storage address of the key is generated. In this way, as shown in FIG. 1, when a certain video needs to be played, a video client may firstly acquire a storage address of a corresponding index file, and then provide the storage address of the index file to a system hardware player of a terminal, thereby the system hardware player may play the video according to default video playing procedures. That is, the corresponding index file is firstly acquired, then an encrypted video file and a key are acquired according to the index file, and the encrypted video file is decrypted with the key, and finally the decrypted video file may be played.

In the process for implementing the present application, the inventor has found that there are at least the following problems in the prior art:

In order to further improve the security of a video file, some video service providers may perform secondary encryption on the video file, that is, the storage address of the key in the index file may be encrypted as well, so that the key for decrypting the video file cannot be acquired unless the storage address of the key is decrypted firstly after the index file is downloaded by a system hardware player. Accordingly, based on the default video playing procedures, the system hardware player would not be able to play the video file encrypted twice.

### SUMMARY

In order to solve the problem in the prior art, embodiments of the present application provide a method and terminal for playing a video file as follows:

On the one hand, a method for playing a video file is provided, comprising:
a video client receiving a video playing instruction of a target video, constructing a video playing request directed to a preset decryption proxy module, and adjusting a system hardware player to processing the video playing request;
the decryption proxy module acquiring a download request of the system hardware player for an index file of the target video;
the decryption proxy module downloading an index file of the target video, reconstructing an encrypted key storage address in the index file, and returning the reconstructed index file to the system hardware player;
the system hardware player acquiring a key through the reconstructed key storage address, and playing the video file of the target video according to the key.

Further, the constructing a video playing request directed to a preset decryption proxy module includes:
the video client constructing the video playing request of the target video carrying a proxy address of the preset decryption proxy module;
the decryption proxy module acquiring the download request of the system hardware player for the index file of the target video, including:
the system hardware player initiating a download request for the index file of the target video according to the proxy address carried in the video play request;
the decryption proxy module receiving the download request for the index file of the target video sent by the system hardware player.

Further, the video client constructs a video playing request that carries the target video directed to an access address of the preset decryption proxy module, including:
the video client acquiring a storage address of the index file of the target video;
the video client adding the proxy address of the preset decryption proxy module to a header of the storage address of the index file.

Further, the decryption proxy module downloading the index file of the target video including:
the decryption proxy module parsing the download request, extracting the storage address of the index file, and downloading the index file of the target video according to the storage address of the index file.

Further, the reconstructing the encrypted key storage address in the index file includes:
the decryption proxy module modifying the encrypted key storage address in the index file into the proxy address of the decryption proxy module;
the system hardware player acquiring the key by using the reconstructed key storage address, including:
the system hardware player sending an acquisition request for the key based on the proxy address;
the decryption proxy module receiving the acquisition request for the key, and decrypting the encrypted key storage address;
the decryption proxy module acquiring the secret key from the decrypted key storage address, and returning the key to the system hardware player.

Further, the decryption proxy module modifies the encrypted key storage address in the index file into the proxy address of the decryption proxy module, including:
the decryption proxy module adding the proxy address of the decryption proxy module to a header of the encrypted key storage address in the index file.

Further, the reconstructing the encrypted key storage address in the index file includes:
the decryption proxy module decrypting the encrypted key storage address;
the system hardware player acquiring the key by using the reconstructed key storage address, including:
the system hardware player acquiring the key from the decrypted key storage address.

Further, after the decryption proxy module downloads the index file of the target video, the method further includes:
if the storage address of the video file in the index file is a relative storage address, the decryption proxy module reconstructs the relative storage address based on the storage address of the index file to acquire an absolute storage address of the video file;

Further, the decryption proxy module reconstructs the relative storage address based on the storage address of the index file, including:
the decryption proxy module adds header information of the storage address of the index file to the header of the relative storage address.

On the other hand, a terminal for playing a video file is provided, the terminal installed with a video client and a system hardware player, wherein:
the video client is used for receiving a video playing instruction of a target video, constructing a video playing request directed to a preset decryption proxy module, and adjusting a system hardware player to processing the video playing request;
the decryption proxy module is used for acquiring a download request of the system hardware player for an index file of the target video;
the decryption proxy module is further used for downloading an index file of the target video, reconstructing an encrypted key storage address in the index file, and returning the reconstructed index file to the system hardware player;
the system hardware player is used for acquiring a key through the reconstructed key storage address, and playing the video file of the target video according to the key.

Further, the video client is used for constructing the video playing request for the target video carrying a proxy address of the preset decryption proxy module;
the system hardware player is further used for initiating a download request for the index file of the target video according to the proxy address carried in the video play request;
the decryption proxy module is further used for receiving the download request for the index file of the target video sent by the system hardware player.

Further, the video client is used for:
acquiring a storage address of the index file of the target video;
adding the proxy address of the preset decryption proxy module to a header of the storage address of the index file.

Further, the decryption proxy module is used for:
parsing the download request, extracting the storage address of the index file, and downloading the index file of the target video according to the storage address of the index file.

Further, the decryption proxy module is sued for modifying the encrypted key storage address in the index file into the proxy address of the decryption proxy module;
the system hardware player is further used for sending an acquisition request for the key based on the proxy address;
the decryption proxy module is further used for receiving the acquisition request for the key, and decrypting the encrypted key storage address;
the decryption proxy module is further used for acquiring the secret key from the decrypted key storage address, and returning the key to the system hardware player.

Further, the decryption proxy module is used for:
adding the proxy address of the decryption proxy module to a header of the encrypted key storage address in the index file.

Further, the decryption proxy module is used for decrypting the encrypted key storage address;
the system hardware player is further used for acquiring the key by using the reconstructed key storage address, including:
the system hardware player is further used for acquiring the key from the decrypted key storage address.

Further, the decryption proxy module is used for:
reconstructing the relative storage address based on the storage address of the index file, if the storage address of the video file in the index file is a relative storage address, to acquire the absolute storage address of the video file.

Further, the decryption proxy module is used for:
adding the header information of the storage address of the index file to the header of the relative storage address.

The technical solution provided by embodiments of the present application has the following advantages:
In the embodiments of the present application, a video client receives a video playing instruction of a target video, constructs a video playing request directed to a preset decryption proxy module, and adjusts a system hardware player to processing the video playing request; the decryption proxy module acquires a download request of the system hardware player for an index file of the target video; the decryption proxy module downloads the index file of the target video, reconstructs an encrypted key storage address in the index file, and returns the reconstructed index file to the system hardware player; the system hardware player acquires the key through the reconstructed key storage address, and plays a video file of the target video according to the key. In this way, when a video needs to be played, the video client may download the index file of the video first, and then reconstruct the encrypted key storage address in the index file, so that the system hardware player may play a video file encrypted twice according to the default video playing processes based on the reconstructed index file.

### BRIEF DESCRIPTION OF THE DRAWINGS

Drawings to be described in the embodiments will be introduced briefly for clearly describing the technical solutions in embodiments of the present application. Obviously, the drawings in the following description are only illustrated for describing some of the embodiments of the present application. Those skilled in the art may acquire other drawings from the illustrated drawings without any creative work.
Fig. 1 is a schematic diagram illustrating a process for playing a video file according to an embodiment of the present application.
Fig. 2 is a flowchart illustrating a method for playing a video file according to an embodiment of the present application.
Fig. 3 is a schematic diagram illustrating a process for playing a video file according to an embodiment of the present application.
Fig. 4 is a schematic diagram illustrating a process for playing a video file according to an embodiment of the present application.
Fig. 5 is a schematic diagram illustrating a structure of a terminal for playing a video file according to an embodiment of the present application.

### DETAILED DESCRIPTION

In order to make the object, technical solutions and advantages of the present application clearer, embodiments of the present application will be further described in detail below with reference to the accompanying drawings.

An embodiment of the present application provides a method for playing a video file. The entity for implementing the method may be a terminal, and the terminal may be any device capable of playing a video, such as a smart phone or a tablet computer, etc. The terminal may be pre-installed with a system hardware player by a terminal manufacturer, and the system hardware player may play a video file generated by using a standard playing protocol such as a HLS streaming media protocol, and the system hardware player may be provided with a video playing interface that may be invoked by another video client. In order to ensure stability of the system hardware player, the terminal manufacturer generally restricts the modification authority of the system hardware player strictly, so that it is difficult for non-terminal manufacturers to modify the system hardware player. The terminal may be installed with a video client by a user, and the video client may be video playing software developed by various video service providers. Further, the video client may also be provided with a decryption proxy module, and the decryption proxy module may acquire an index file of a target video and reconstruct the index file, so that the system hardware player may play the target video by using the reconstructed index file. In another situation, the decryption proxy module may be a proxy server independent of the terminal. The above-described terminal may comprise a processor, a memory and a transceiver, where, the processor may be configured for processing the play of a video file in the following procedures, the memory may be configured for storing data required during the above process and the generated data, and the transceiver may be configured to receive and send relevant data during the process.

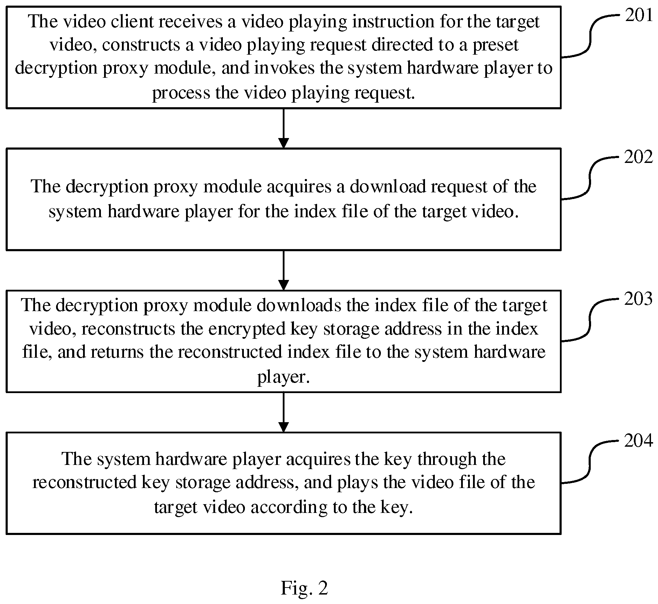

The process for playing a video file shown in Fig. 2 will be described in detail below with reference to the embodiments, and the processes comprise:
Step 201: the video client receives a video playing instruction for the target video, constructs a video playing request directed to a preset decryption proxy module, and invokes the system hardware player to process the video playing request.

In implementation, a user may install on a terminal the video client for playing a video, through which a video file provided by a video service provider may be played. When a user asks to watch a video (for example, the target video), he/she may open the above video client and search for the target video, and the terminal may accordingly display an information page for the target video. After the user clicks a video play button on the information page, the video client may receive a video playing instruction for the target video, and then the video client may construct a video playing request directed to the preset decryption proxy module, and send the video playing request to the system hardware player of the terminal, so as to invoke the system hardware player to process the video playing request.

Alternatively, the video client may use a proxy address of the decryption proxy module to construct the video playing request directed to the decryption proxy module. Correspondingly, part of the processes in step 201 may be illustrated as follows: the video client constructs the video playing request for the target video carrying with the proxy address of the preset decryption proxy module.

In implementation, the proxy address (such as, http://127.0.0.1:portxxx) of the decryption proxy module is pre-stored in the video client. In this way, after receiving the video playing instruction for the target video, the video client may generate a video playing request corresponding to the video playing instruction, and the video client adds the proxy address of the decryption proxy module to the video playing request to construct a video playing request carrying with the proxy address of the decryption proxy module.

Alternatively, the video client may add the proxy address of the decryption proxy module to a header of the storage address of the index file, and the corresponding process may comprise: the video client acquires the storage address of the index file of the target video; and the video client adds the proxy address of the preset decryption proxy module to the header of the storage address of the index file.

In implementation, after receiving the video playing request for the target video, the video client may acquire the storage address of the index file carried in the video playing request, and then the video client may add the proxy address of the decryption proxy module to the header of the storage address of the index file. For example, the storage address of the index file may be http://xxxxxx:5555/test/1102/prog_index.m3u8, and the access address of the decryption proxy module may be http://127.0.0.1:portxxx, then, the storage address of the index file added with the proxy address may be acquired, which is http://127.0.0.1:portxxx/xxxxxx:5555/test/1102/prog_index.m3u8.

Step 202: The decryption proxy module acquires a download request of the system hardware player for the index file of the target video.

In implementation, after receiving the video playing request, the system hardware player may initiate the download request for the index file of the target video. Since the video playing request is actually directed to the decryption proxy module, the system hardware player actually initiates to the decryption proxy module a download request for the index file of the target video. In this way, the decryption proxy module may acquire the download request of the system hardware player for the index file of the target video.

Alternatively, based on the above-described case where the proxy address is carried in the video playing request, the processing of step 202 may comprises: the system hardware player initiates the download request for the index file of the target video according to the proxy address carried in the video playing request; the decryption proxy module receives the download request for the index file of the target video sent by the system hardware player.

In implementation, after receiving the video playing request for the target video sent by the video client, the system hardware player may acquire the proxy address carried in the video playing request and directed to the decryption proxy module, and then the process for downloading the index file may be performed according to the default video playing procedures. Specifically, the system hardware player may access the above-described proxy address, and send the download request for the index file of the target video to the receiving end (actually, the decryption proxy module of the video client) corresponding to the proxy address. In this way, the decryption proxy module may receive the download request for the index file of the target video sent by the system hardware player.

Step 203: The decryption proxy module downloads the index file of the target video, reconstructs an encrypted key storage address in the index file, and returns the reconstructed index file to the system hardware player.

In implementation, after acquiring the download request of the system hardware player for the index file of the target video, the decryption proxy module may download the index file of the target video, and then the decryption proxy module may reconstruct the encrypted key storage address in the index file, and return the reconstructed index file to the system hardware player.

Alternatively, the decryption proxy module may acquire the storage address of the index file from the download request, thereby downloading the index file, and part of the processes in step 203 may comprises: the decryption proxy module parses the download request, extracts the storage address of the index file, and downloads the index file of the target video according to the storage address of the index file.

In implementation, after acquiring the download request of the system hardware player for the index file of the target video, the decryption proxy module may parse the download request to extract the storage address of the index file, and then the decryption proxy module may download the index file of the target video by accessing the storage address of the index file.

Alternatively, the decryption proxy module may reconstruct the encrypted key storage address in the index file by using the proxy address of the decryption proxy module. Correspondingly, the process of reconstructing the encrypted key storage address in the index file in step 203 may comprise: the decryption proxy module modifies the encrypted key storage address in the index file into the proxy address of the decryption proxy module.

In implementation, after downloading the index file of the target video, the decryption proxy module may read the encrypted key storage address recorded in the index file. After that, the decryption proxy module may modify the encrypted key storage address read from index file into the proxy address of the decryption proxy module. Specifically, the decryption proxy module may add the proxy address of the decryption proxy module to the header of the encrypted key storage address in the index file. For example, the encrypted key storage address in the index file may be http://xxxxxx:5555/secure/token=eyJoYXNoX3Zh, and the proxy address of the decryption proxy module may be http://127.0.0.1:portxxx. Accordingly, the decryption proxy module may add the proxy address of the decryption proxy module to the header of the encrypted key storage address , thereby constructing the proxy address directed to the decryption proxy module, http://127.0.0.1: portxxx/xxxxxx:5555/secure/token=eyJoYXNoX3Zh.

Alternatively, the decryption proxy module may directly decrypt the encrypted key storage address. Correspondingly, the process of reconstructing the encrypted key storage address in the index file in step 203 may further comprises: the decryption proxy module decrypts the encrypted key storage address.

In implementation, after downloading the index file of the target video, the decryption proxy module may read the encrypted key storage address recorded in the index file. Then the decryption proxy module may decrypt the encrypted key storage address to acquire the decrypted key storage address, and the decryption proxy module may modify the encrypted key storage address in the index file into the above-described decrypted key storage address, and then the index file that records the decrypted key storage address is returned to the system hardware player.

Step 204: The system hardware player acquires the key through the reconstructed key storage address, and plays the video file of the target video according to the key.

In implementation, after receiving the index file returned by the decryption proxy module, on one hand, the system hardware player may acquire the key through the encrypted key storage address after reconstruction in the index file according to the default video playing procedures; on the other hand, the system hardware player may read the video file storage address of the target video in the index file, and then download the video file of the target video through the video file storage address, according to the default video playing processes. In this way, the system hardware player may decrypt the video file of the downloaded target video by using the key, so that the video file of the target video may be played after the decryption is completed.

Alternatively, when the decryption proxy module modifies the encrypted key storage address in the index file into the proxy address of the decryption proxy module, the process of the system hardware player acquiring the key in step 204 may comprise: the system hardware player sends a request for acquiring the key based on the proxy address; the decryption proxy module receives the request for acquiring the key, and decrypts the encrypted key storage address; the decryption proxy module acquires the key from the decrypted key storage address, and returns the key to the system hardware player.

In implementation, after receiving the index file of the target video, the system hardware player may read the proxy address of the decryption proxy module recorded in the index file, and then the system hardware player may access the proxy address, and send a request for acquiring the key to a receiving end (actually, the decryption proxy module of the video client) corresponding to the proxy address. In this way, the decryption proxy module may receive the request for acquiring the key sent by the system hardware player, and then decrypt the encrypted key storage address, so that the decrypted key storage address may be acquired. Then the decryption proxy module may access the decrypted key storage address, download the corresponding key, and return the acquired key to the system hardware player.

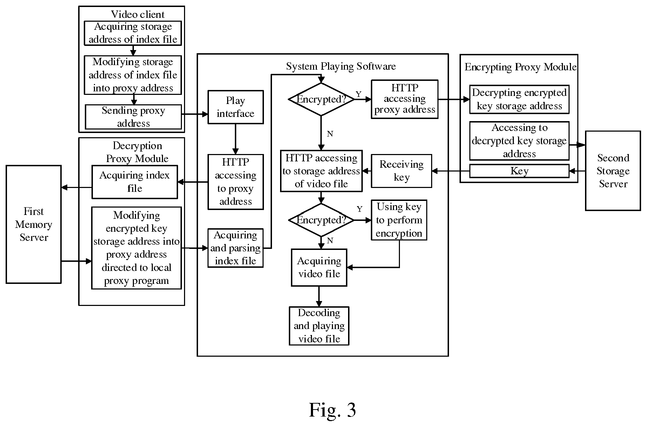

It is worth mentioning that the decryption proxy module modifies the encrypted key storage address into the proxy address directed to the decryption proxy module, and returns to the system hardware player the key acquired by decrypting and accessing the key storage address, after receiving the request for acquiring the key from the system hardware player, thus, a key storage address is not directly presented in plaintext in the index file. In this way, even if the index file is intercepted, the decrypted key storage address may not be acquired, thereby the security of the target video may be guaranteed. The decryption proxy module modifies the encrypted key storage address into the proxy address directed to the decryption proxy module, and sends the index file carrying with the proxy address to the system hardware player, so that the system hardware player may play the target video according to the default video playing procedures. Fig. 3 may be referred to for complete processes of the above.

Alternatively, on the basis of the above-described processes in which the decryption proxy module sends the index file after decrypting the key storage address, the system hardware player acquiring the key in step 204 may comprise: the system hardware player acquires the key from the decrypted key storage address.

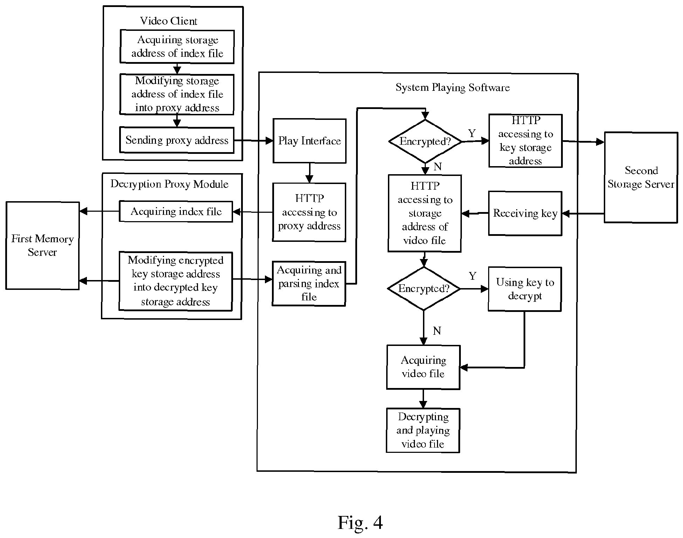

In implementation, after receiving the index file of the target video, the system hardware player may read the decrypted key storage address recorded in the index file, and then download the key at the decrypted key storage address, according to the default video playing procedures. The decryption proxy module decrypts the encrypted key storage address, and sends the index file carrying with the decrypted key storage address to the system hardware player, so that the system hardware player may play the target video according to the default video playing procedures. Fig. 4 may be referred to for complete processes of the above.

Alternatively, if the storage address of the video file in the index file is a relative storage address, the process of the decryption proxy module may comprise: if the storage address of the video file in the index file is a relative storage address, the decryption proxy module reconstructs the relative storage address based on the storage address of the index file so as to acquire the absolute storage address of the video file.

In implementation, after downloading the index file of the target video, the decryption proxy module may further determine the type of the storage address of the video file included in the index file, wherein, the type of the storage address of the video file includes a relative storage address and an absolute storage address. The relative storage address may be acquired by processing the absolute storage address, such as deleting header information on the storage address of the index file from the absolute storage address, thus, the video file may not be acquired through the relative storage address. If the storage address of the video file in the index file is a relative storage address, the decryption proxy module may reconstruct the relative storage address based on the storage address of the index file so as to acquire the absolute storage address of the video file.

Alternatively, the process of the decryption proxy module reconstructing the relative storage address may comprise: the decryption proxy module adds the header information of the storage address of the index file to the header of the relative storage address.

In implementation, after downloading the index file of the target video, the decryption proxy module may extract the relative storage address of the video file from the index file, and then the decryption proxy module uses the obtained storage address of the index file, and adds the header information of the storage address of the index file to the header of the relative storage address, so as to obtain the absolute storage address of the video file through reconstruction. For example, if the storage address of the index file is http://xxxxxx:5555/test/1102/prog_index.m3u8, and the relative storage address of the video file is fileSequence0.ts, the absolute storage address of the video file may be http://xxxxxx: 5555/test/1102/fileSequence0.ts

In this embodiment of the present application, the video client receives a video playing instruction for the target video, constructs a video playing request directed to a preset decryption proxy module, and invokes the system hardware player to process the video playing request; the decryption proxy module acquires a download request of the system hardware player for an index file of the target video; the decryption proxy module downloads the index file of the target video, reconstructs the encrypted key storage address in the index file, and returns the reconstructed index file to the system hardware player; the system hardware player acquires the key through the reconstructed key storage address, and plays the video file of the target video according to the key. In this way, when a video needs to be played, the video client may firstly download the index file of the video, and then reconstruct the encrypted key storage address in the index file, so that the system hardware player may play a video file encrypted twice according to default video playing procedures based on the reconstructed index file.

Based on the same technical concept, an embodiment of the present application further provides a terminal for playing a video file, wherein the terminal is installed with a video client and a system hardware player, wherein:
the video client is configured for receiving a video playing instruction for a target video, constructing a video playing request directed to a preset decryption proxy module, and invoking a system hardware player to process the video playing request;
the decryption proxy module is configured for acquiring a download request of the system hardware player for an index file of the target video;
the decryption proxy module is further configured for downloading an index file of the target video, reconstructing an encrypted key storage address in the index file, and returning the reconstructed index file to the system hardware player;
the system hardware player is configured for acquiring a key through the reconstructed key storage address, and playing the video file of the target video according to the key.

Further, the video client is configured for constructing the video playing request for the target video carrying with a proxy address of the preset decryption proxy module;
the system hardware player is further configured for initiating a download request for the index file of the target video according to the proxy address carried in the video play request;
the decryption proxy module is further configured for receiving the download request for the index file of the target video sent by the system hardware player.

The video client is further configured for:
acquiring a storage address of the index file of the target video; and
adding the proxy address of the preset decryption proxy module to a header of the storage address of the index file.

Further, the decryption proxy module is configured for:
parsing the download request, extracting the storage address of the index file, and downloading the index file of the target video according to the storage address of the index file.

The decryption proxy module is further configured for modifying the encrypted key storage address in the index file into the proxy address of the decryption proxy module;
the system hardware player is further configured for sending a request for acquiring the key based on the proxy address;
the decryption proxy module is further configured for receiving the request for acquiring the key, and decrypting the encrypted key storage address;
the decryption proxy module is further configured for acquiring the key from the decrypted key storage address, and returning the key to the system hardware player.

Further, the decryption proxy module is further configured for:
adding the proxy address of the decryption proxy module to a header of the encrypted key storage address in the index file.

Further, the decryption proxy module is further configured for decrypting the encrypted key storage address;
the system hardware player further configured for acquiring the key by using the reconstructed key storage address, including:
the system hardware player is further configured for acquiring the key from the decrypted key storage address.

Further, the decryption proxy module is further configured for:
reconstructing, if the storage address of the video file in the index file is a relative storage address, the relative storage address based on the storage address of the index file, so as to acquire the absolute storage address of the video file.

The decryption proxy module is further configured for:
adding the header information of the storage address of the index file to the header of the relative storage address.

In this embodiment of the present application, a video client receives a video playing instruction of a target video, constructs a video playing request directed to a preset decryption proxy module, and invokes a system hardware player to process the video playing request; the decryption proxy module acquires a download request of the system hardware player for the index file of the target video; the decryption proxy module downloads an index file of the target video, reconstructs an encrypted key storage address in the index file, and returns the reconstructed index file to the system hardware player; the system hardware player acquires a key through the reconstructed key storage address, and plays the video file of the target video according to the key. In this way, when a video needs to be played, the video client may firstly download the index file of the video, and then reconstruct the encrypted key storage address in the index file, so that the system hardware player may play a video file encrypted twice according to default video playing processes based on the reconstructed index file.

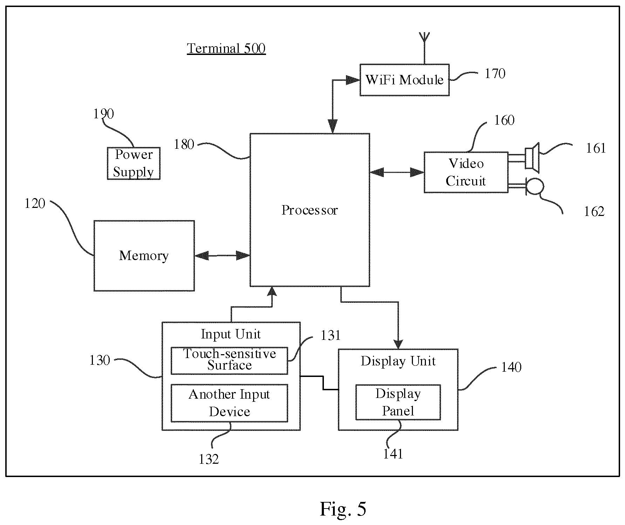

Fig. 5 is a schematic diagram of a structure of a terminal for playing a video file according to an exemplary embodiment. The terminal may be used for implementing the method of playing a video file provided in the above-described embodiments.

A terminal 500 may include components, such as a memory 120 having one or more computer readable storage media, an input unit 130, a display unit 140, an audio circuit 160, a WiFi (Wireless Fidelity) module 170, a processor 180 having one or more processing core(s), a power supply 150, etc. Those skilled in the art may understand that the structure of the terminal shown in Fig. 5 does not constitute a limitation to the terminal, and it may comprise more or less components than those illustrated, or a combination of some components, or different component arrangements. Where,

The memory 120 may be configured for storing software programs and modules, and the processor 180 performs various functional applications and data processing by running software programs and modules stored in the memory 120. The memory 120 may mainly include a program storage area and a data storage area, wherein the program storage area may store an application and the like required by an operation system for at least one function (e.g., a video playing function, an image playing function, etc.), and wherein the data storage area may store data (such as video data, index files, etc.) created in accordance with use of the terminal 500. Moreover, the memory 120 may include a high-speed random access memory, and it may further include a non-volatile memory such as at least one magnetic disk memory device, a flash memory device, or other volatile solid-state memory devices. Accordingly, the memory 120 may further include a memory controller to provide access of the processor 180 and the input unit 130 to the memory 120

The input unit 130 may be configured for receiving input information on numbers or characters, and generating a keyboard, mouse, joystick, optical or trackball signal input related to user settings and function control. In particular, the input unit 130 may include a touch-sensitive surface 131 as well as other input devices 132. The touch-sensitive surface 131, also referred to as a touch display or trackpad, may collect a touch operations thereon or nearby (for example, a user's operation on or near the touch-sensitive surface 131 by using any suitable object or accessory like a finger, a stylus, etc.), and may drive a corresponding connecting device according to a preset program. Alternatively, the touch-sensitive surface 131 may include two portions, a touch detection device and a touch controller. The touch detection device detects a touch orientation of the user and detects a signal generated by the touch operation, and sends the signal to the touch controller; the touch controller receives touch information from the touch detection device, and converts it to contact coordinates and sends the converted coordinates to the processor 180, and the touch controller may receive and perform a instruction sent from the processor. In addition, the touch-sensitive surface 131 may be implemented as touch-sensitive surface of resistive, capacitive, infrared, or surface acoustic wave. In addition to the touch-sensitive surface 131, the input unit 130 may further include other input device 132. Specifically, another input device may include, but not limited to, one or more of a physical keyboard, function key (such as a volume control button, a switch button, etc.), trackball, mouse, joysticks, and so on.

The display unit 140 may be configured for displaying information input by the user or information provided to the user and various graphical user interfaces of the terminal 500. A graphical user interface may be composed of graphics, texts, icons, videos, and any combination thereof. The display unit 140 may include a display panel 141. Alternatively, the display panel 141 may be configured in such forms as an LCD (Liquid Crystal Display) and an OLED (Organic Light-Emitting Diode). Further, the touch-sensitive surface 131 may cover the display panel 141. When the touch-sensitive surface 131 detects a touch operation thereon or nearby, it sends the detected touch operation to the processor 180 to determine the type of the touch event, and then the processor 180 provides a corresponding visual output on the display panel 141 according to the type of the touch event. Although the touch-sensitive surface 131 and the display panel 141 performs input and output functions as two independent components in Fig. 5, the touch-sensitive surface 131 may be integrated with the display panel 141 to implement input and input functions in some embodiments.

An audio circuit 160, a speaker 161, and a microphone 162 may provide an audio interface between the user and the terminal 500. The audio circuit 160 may transmit an electrical signal converted from received audio data to the speaker 161, and the speaker converts the electrical signal to a sound signal for outputting; further, the microphone 162 converts the collected sound signal into an electrical signal and the audio circuit 160 receives the electrical signal and converts it to audio data. The audio data is output to and further processed by the processor 180, and then the processed audio data is sent to, for example, another terminal through an RF circuit 110, or the audio data is output to the memory 120 for further process. The audio circuit 160 may further comprise an earbud jack so as to provide communication between an external earphone and the terminal 500.

WiFi belongs to a short-distance wireless transmission technology, and the terminal 500 may help the user transceiving emails, browsing web pages and accessing streaming media and the like through the WiFi module 170, which provides the user with wireless broadband Internet access. Although Fig. 5 illustrates the WiFi module 170, it may be appreciated that it is not a component necessarily included in the terminal 500, and may be omitted as needed within the scope that does not change the essence of the application.

As a control center of the terminal 500, the processor 180 implements various functions of the terminal 500 and processes data by using various interfaces and circuits to connect every part of a mobile phone, running or executing software programs and/or modules stored in the memory 120, and adjusting data stored in the memory 120, thereby performing integrated monitoring over the mobile phone. Alternatively, the processor 180 may include one or more processing cores; preferably, the processor 180 may integrate an application processor and a modem processor, where the application processor mainly processes an operating system, a user interface, an application and the like, while the modem processor primarily processes wireless communications. It is perceivable that the above-described modem processor may else not be integrated into the processor 180.

The terminal 500 further includes a power supply 150 (for example, a battery) for supplying power to respective components. Preferably, the power supply may be logically connected to the processor 180 through a power management system, so as to perform their functions of charge management, discharge management, and power consumption management through the power management system. The power supply 150 may further include one or more DC or AC power supply(supplies), a recharging system, a power failure detection circuit, a power converter or inverter, a power status indicator, and the like.

The terminal 500 further includes a memory, and one or more programs, wherein the one or more programs are stored in the memory, and are used to execute, by the one or more processors, an instruction for processing playing of the above-described video files, the instruction included in the above-described one or more programs.

Those skilled in the art may comprehend that all or some of the steps for implementing the above-described embodiments may be performed by hardware, or by a related hardware instructed by a program. The program may be stored in a computer readable storage medium which may be a read-only memory, a magnetic disk or an optical disk or the like.

The above-described are preferred embodiments of the present application only, which are not intended to limit the present application. Any modifications, equivalent substitutions, improvements, etc., which are made within the spirit and principles of the present application, shall be considered as falling within the protection scope of the present disclosure.

## Claims

1. A method for playing a video file, comprising:
receiving, by a video client, a video playing instruction for a target video, constructing a video playing request directed to a preset decryption proxy module, and invoking a system hardware player to process the video playing request;
acquiring, by the decryption proxy module, a download request of the system hardware player for an index file of the target video;
downloading, by the decryption proxy module, the index file of the target video, reconstructing an encrypted key storage address in the index file, and returning the reconstructed index file to the system hardware player;
acquiring, by the system hardware player, a key through the reconstructed key storage address, and playing the video file of the target video according to the key.

2. The method according to claim 1, wherein,
the constructing a video playing request directed to a preset decryption proxy module comprises: constructing, by the video client, the video playing request for the target video carrying with a proxy address of the preset decryption proxy module;
the acquiring, by the decryption proxy module, the download request of the system hardware player for the index file of the target video comprises:
initiating, by the system hardware player, the download request for the index file of the target video according to the proxy address carried in the video playing request; and
receiving, by the decryption proxy module, the download request for the index file of the target video sent by the system hardware player.

3. The method according to claim 2, wherein, the constructing, by the video client, the video playing request for the target video carrying with an access address directed to the preset decryption proxy module comprises:
acquiring, by the video client, a storage address of the index file of the target video; and
adding, by the video client, the proxy address of the preset decryption proxy module to a header of the storage address of the index file.

4. The method according to claim 3, wherein the downloading, by the decryption proxy module, the index file of the target video comprises:
parsing, by the decryption proxy module, the download request, extracting the storage address of the index file, and downloading the index file of the target video according to the storage address of the index file.

5. The method according to claim 1, wherein,
the reconstructing the encrypted key storage address in the index file comprises modifying, by the decryption proxy module, the encrypted key storage address in the index file into the proxy address of the decryption proxy module;
the acquiring, by the system hardware player, the key through the reconstructed key storage address comprises:
sending, by the system hardware player, a request for acquiring the key based on the proxy address;
receiving, by the decryption proxy module, the request for acquiring the key, and decrypting the encrypted key storage address; and
acquiring, by the decryption proxy module, the key from the decrypted key storage address, and returning the key to the system hardware player.

6. The method according to claim 5, wherein, the modifying, by the decryption proxy module, the encrypted key storage address in the index file into the proxy address of the decryption proxy module comprises:
adding, by the decryption proxy module, the proxy address of the decryption proxy module to a header of the encrypted key storage address in the index file.

7. The method according to claim 1, wherein,
the reconstructing the encrypted key storage address in the index file comprises: decrypting, by the decryption proxy module, the encrypted key storage address;
the acquiring, by the system hardware player, the key through the reconstructed key storage address comprises: acquiring, by the system hardware player, the key from the decrypted key storage address.

8. The method according to claim 1, further comprising: after the decryption proxy module downloads the index file of the target video, reconstructing by the decryption proxy module, if the storage address of the video file in the index file is a relative storage address, the relative storage address based on the storage address of the index file, so as to acquire an absolute storage address of the video file.

9. The method according to claim 8, wherein the reconstructing, by the decryption proxy module, a relative storage address based on the storage address of the index file comprises: adding, by the decryption proxy module, header information of the storage address of the index file to a header of the relative storage address.

10. A terminal for playing a video file, the terminal is installed with a video client and a system hardware player, wherein:
the video client is configured for receiving a video playing instruction for a target video, constructing a video playing request directed to a preset decryption proxy module, and invoking a system hardware player to process the video playing request;
the decryption proxy module is configured for acquiring a download request of the system hardware player for an index file of the target video;
the decryption proxy module is further configured for downloading an index file of the target video, reconstructing an encrypted key storage address in the index file, and returning the reconstructed index file to the system hardware player; and
the system hardware player is configured for acquiring a key through the reconstructed key storage address, and playing the video file of the target video according to the key.

11. The terminal according to claim 10, wherein:
the video client is configured for constructing the video playing request for the target video carrying with a proxy address of the preset decryption proxy module;
the system hardware player is further configured for initiating a download request for the index file of the target video according to the proxy address carried in the video play request; and
the decryption proxy module is further configured for receiving the download request for the index file of the target video sent by the system hardware player.

12. The terminal according to claim 11, wherein the video client is further configured for acquiring a storage address of the index file of the target video; and adding the proxy address of the preset decryption proxy module to a header of the storage address of the index file.

13. The terminal according to claim 12, wherein the decryption proxy module is further configured for:
parsing the download request, extracting the storage address of the index file, and downloading the index file of the target video according to the storage address of the index file.

14. The terminal according to claim 10, wherein:
the decryption proxy module is further configured for modifying the encrypted key storage address in the index file into the proxy address of the decryption proxy module;
the system hardware player is further configured for sending a request for acquiring the key based on the proxy address;
the decryption proxy module is further configured for receiving request for acquiring the key, and decrypting the encrypted key storage address; and
the decryption proxy module is further configured for acquiring the key from the decrypted key storage address, and returning the key to the system hardware player.

15. The terminal according to claim 14, wherein the decryption proxy module is further configured for adding the proxy address of the decryption proxy module to a header of the encrypted key storage address in the index file.

16. The terminal according to claim 10, wherein:
the decryption proxy module is further configured for decrypting the encrypted key storage address;
the system hardware player acquiring the key through the reconstructed key storage address comprises: the system hardware player is further configured for acquiring the key from the decrypted key storage address.

17. The terminal according to claim 10, wherein the decryption proxy module is further configured for reconstructing, if the storage address of the video file in the index file is a relative storage address, the relative storage address based on the storage address of the index file, so as to acquire an absolute storage address of the video file.

18. The terminal according to claim 17, wherein the decryption proxy module is further configured for adding header information of the storage address of the index file to a header of the relative storage address.
